# EUROPEAN PATENT APPLICATION

(11) **EP 4 434 338 A1**
(43) Date of publication of application: **25.09.2024**
(21) Application number: 23163581.4
(22) Date of filing: 22.03.2023
(51) Int. Cl.: A01M 7/00, B05B 1/20, B64D 1/18

(54) **ROTARY LIQUID SPRAYER FOR SPRAYING A LIQUID USED IN PEST CONTROL, PUBLIC HEALTH, INDUSTRY AND AGRICULTURE**

(71) Applicant: MICRON SPRAYERS LIMITED, Bromyard, Herefordshire HR7 4HS (GB)
(72) Inventor: CLAYTON, JOHN, BROMYARD, HEREFORDSHIRE, HR7 4HS (GB)
(74) Representative: Durán-Corretjer, S.L.P.

(57) **Abstract**

Rotary liquid sprayer for spraying a liquid for controlling pests onto surfaces, the rotary liquid sprayer having
a spray head,
a rotary atomiser,
a mover for rotating the rotary atomiser around an axis,
a liquid reservoir,
a duct connecting the reservoir with an interior of the rotary atomiser,
the rotary atomiser having an external surface with holes which connect the interior of the rotary atomiser with its exterior for atomising the liquid coming from said interior, **characterised in that** the external surface is formed by a cylindrical sheet, and the holes have at least an angular form formed by edges forming angles of less than 180º, the angular form between said edges being evenly distributed on the surface and equidistant with respect to the axis.

## Description

The present invention refers to rotary atomisers used in pest control, public health, industry and agriculture. More concretely, the present invention relates to an atomising surface for rotary liquid atomisers with an angular form pattern used for controlling pests, public health, agricultural and industrial spraying tasks.

Rotary liquid atomisers have been used successfully in sprayers as a way of atomising liquids where it is necessary to control the range of spray and the droplet size produced during the atomisation. These liquids, such as pesticides or any product intended for pest control, public health, agricultural or industrial spraying tasks, may be sprayed on the ground or onto weeds, crops, vegetation, surfaces, air spaces or any other targets.

JPH11300250A describes rotary sprayers used for controlling pests, public health and agriculture. The sprayer comprises an air inlet duct - through which an airstream flows - mechanically connected to a spray head. A rotary liquid atomiser is mounted inside the spray head and further coaxially arranged with the air inlet duct. A liquid inlet duct feeds the rotary liquid atomiser. Said rotary liquid atomiser may further be provided with mechanical means attached to the outer surface of the rotary liquid atomiser, capable of transforming the airstream kinetic energy into a rotary motion. In one embodiment, said means comprise blades that are fixed to the outer surface of the rotary liquid atomiser and arranged to produce, upon an airstream, a joint rotational movement, which causes the atomiser head to rotate. The rotational speed determines the centrifugal forces upon the liquid as it exits the perforated rotating surface of the atomiser head, causing the atomisation of the liquid and spreading the liquid by means of the airstream.

BRMU8802711 U2 describes rotary sprayers using a wire square mesh as the atomising surface. The spray head moves at a sufficiently high speed to produce the rotational movement of the rotary liquid atomiser blades and ensure proper atomisation of the liquid, an air inlet duct not being required.

CA619075A and GB876067A describe rotary sprayers which use a wire mesh as an atomisation surface. In CA619075A the means for rotating the perforated or gauze drum comprises an air impeller, either driving said drum direct or through a suitable transmission. GB876067A describes a rotary sprayer wherein an internal combustion engine rotates the atomiser head by means of a shaft.

A drawback of the cited prior art is that the droplet size and distribution out of the sprayer are not homogeneous. Since they are used for the treatment of surfaces and/or air spaces of great proportions (like crops, forests, plantations, soils, urban and indoor spaces and surfaces) it is important for the efficacy of the products applied that distribution of spray onto the surface or airspace is maximised by efficient drop size control.

An objective of the present invention is to provide an improvement to the above mentioned methods of creating homogenous drop sizes.

The present invention is based on using a sheet with angular holes as the atomising surface in rotary sprayers.

The holes, which allow liquid passing, have angular forms or vertices. The vertices are preferably evenly distributed on the sheet and are equidistant to the axis of rotation of the rotating surface. The angular forms channel liquid into a ligament as the liquid is emitted through the holes of the rotating atomising surface. These ligaments break up into liquid droplets as they rotate through the air, projecting droplets out into a circular plume. The use of holes with vertices, preferably hexagonal holes, provides a more defined surface for liquid atomisation and hence a more regular breaking up of the liquid into droplets. A rotating liquid atomiser using a hexagonal hole pattern for the atomisation surface allows the use of higher flow rates with multiple issuing points compared to perforated round holes in metal sheets, since the use of hexagonal form allows maximising the number of issuing points per unit area. Consequently, the flow capacity of the atomisation surface increases. Moreover, the atomisation works equally well in both rotation directions.

The inventor of the present invention has determined through experimentation that the use of a wire mesh in which a round wire is laid on top of another, used as an atomising surface by the prior art, provides a less regular atomisation ligament distribution and hence less regular drop size. After studying the experimental results, it is theorised that the irregularity in the emitted ligaments is due to an irregular atomising surface, involving both atomising points being irregular in shape and having different distances to the rotation axis of the rotating surface.

More in particular, the present invention relates to a rotary liquid sprayer for spraying a liquid for controlling pests onto surfaces, the rotary liquid sprayer having
a spray head,
a rotary atomiser,
a mover for rotating the rotary atomiser around an axis,
a liquid reservoir,
a duct connecting the reservoir with an interior of the rotary atomiser,
the rotary atomiser having an external surface with holes which connect the interior of the rotary atomiser with its exterior for atomising the liquid coming from said interior, **wherein** the external surface is formed by a cylindrical sheet, and the holes have at least an angular form formed by edges forming angles of less than 180º, the angular form between said edges being evenly distributed on the surface and equidistant with respect to the axis.

The use of a perforated surface with angular form aids in forming uniform ligaments that create more even sized spray droplets. The size is determined by the rotational speed of the atomiser but the uniformity of the spray droplet size is determined by the liquid delivery and the issuing surface of the atomiser. The more consistent the surface with angular projections to aid ligament formation in a uniform means and overcome surface tension leading to better drop size control.

Preferably, the rotary liquid sprayer angular forms are formed by edges forming said angles and are symmetrically distributed about the axis of rotation.

Preferably, the angular form forming the hole, is oriented in such a way that its bisector is coincident and parallel to the direction of tangential velocity of the rotary atomiser.

Preferably, the opening sense of the angle is the same as the sense of the tangential velocity of the rotary atomiser.

More preferably, the holes have more than one angular form forming the hole, and those are oriented in such a way that at least two angular forms bisectors are coincident and parallel to the direction of tangential velocity of the rotary atomiser.

Even more preferably, the rotary liquid sprayer holes have hexagonal shape.

Preferably, the rotary liquid sprayer has an airstream generator for generating an airstream along the axis and the rotary atomiser is coaxially arranged with the airstream so that the airstream surrounds the rotary atomiser.

More preferably, the airstream generator comprises a blower and an air duct or uses the airflow generated from a flying aircraft.

Preferably the mover comprises blades fixed to the rotary atomiser arranged so that the airstream impinges on the blades, making the rotary atomiser to rotate.

Preferably the rotary liquid atomiser is used for spraying a liquid over surfaces or/and air spaces.

It is also disclosed the use of rotary liquid atomiser of the present invention for controlling pests, and/or public health, and/or industrial and/or agricultural spraying tasks. Preferably, the atomised liquid is a pesticide.

The accompanying drawings are included to provide a further understanding of the present disclosure. The drawings illustrate the present disclosure and, together with the description, serve to explain the principles of the present disclosure:
**Fig.1** is a schematic view of a motorised mist blower sprayer using a rotary liquid atomiser.
**Fig.2** is a sectional view of a spray head in which the rotary liquid atomiser is disposed into the air inlet duct.
**Fig.3** is a schematic view of a hexagonal pattern used as rotary liquid atomiser atomising surface.
**Fig.4** is a schematic view of a spray head assembly.
**Fig.5** is an illustrative representation of liquid ligaments emitted from the atomising surface, showing those ligaments exiting in a regular size and length, and subsequently breaking up into regular size droplets.
**Fig.6** is a schematic view of an aerial sprayer (for aircraft) using rotary liquid atomiser.
**Fig.7** is a schematic view of a self-contained vehicle mounted sprayer, using rotary liquid atomiser.

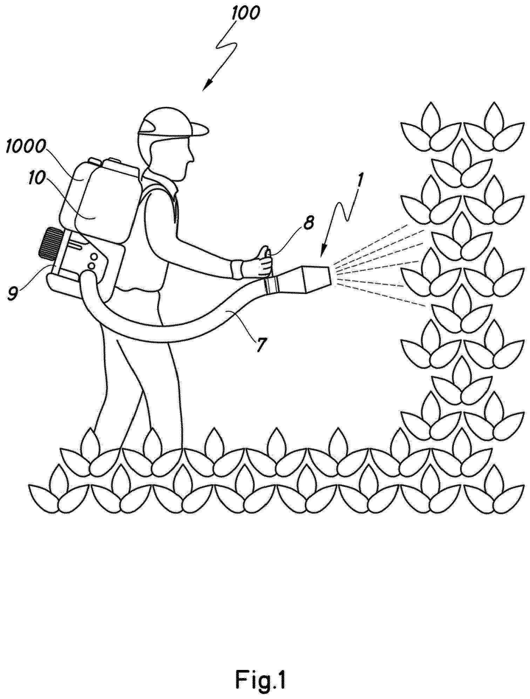

Referring to **Fig. 1**, a motorised mist blower sprayer with rotary atomiser 100 incorporates an internal combustion engine 9, driving an air blower. A fuel tank feeds the internal combustion engine 9 by means of a fuel duct. The air blower is connected to a spray head 1 through an air inlet duct 7. Said air inlet duct 7 may be manufactured of a relatively flexible or rigid duct. The inlet duct 7 has a sufficient diameter to generate the necessary flow rate at the outlet of the spray head 1. The spray head 1 is fed with a liquid, such as, preferably, a pesticide or any product intended to be used for pest control or public health or agricultural spraying tasks. The liquid is fed by means of an inlet liquid duct 6 that communicates the liquid tank 10 with the inner part of the spray head 1. Additionally, the spray head 1 has a moulded handle 8 mechanically fixed with clamps between the air inlet duct 7 and the spray head 1.

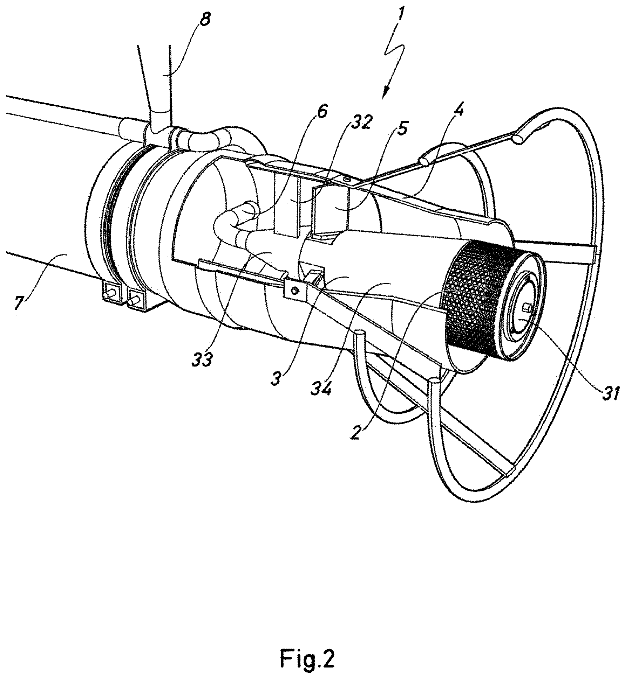

Referring now to **Fig. 2** a sectional view of a spray head 1 is shown in which a rotating liquid atomiser 3 is embedded. The rotating liquid atomiser 3 communicates with the inlet liquid duct 6 through mechanical joining means 33, which allow relative rotation of the rotating liquid atomiser 3 with respect to the inlet liquid duct 6. Said mechanical joining means 33 further incorporates flat fixing elements 32, wherein the faces of a smaller surface are oriented perpendicular to the airflow to decrease the drag coefficient and achieve an air laminar flow. A plurality of flat fixing elements 32 are attached on the surface of the mechanical joining means 33 and to the inner spray head surface 4. The rotating liquid atomiser 3 further comprises a set of blades 5 that are fixed on its surface and arranged to produce, upon an airstream, a joint rotational movement, which causes the rotating liquid atomiser 3 and an atomising surface 2 to rotate.

The rotating liquid atomiser 3 comprises a hollow truncated cone-shaped body 34, whose base of smaller diameter is rotationally connected to the mechanical joining means 33 and a larger diameter base is attached to an atomising head comprising the atomising surface 2 and an atomiser head cover 31. The atomiser head cover 31 forces the liquid to exit through the atomising surface 2 tangentially.

By virtue of the above configuration and referring to **Fig.1** and **Fig. 2**, the airstream generated by the blower - which obtains the mechanical energy necessary to perform its function from the internal combustion engine - flows through the air inlet duct 7 to reach the interior of the rotary liquid atomiser 3. in parallel and controlled by the user by means of control valves (not shown), the liquid flows from the liquid tank 10 through the liquid inlet duct 6 to the rotary liquid atomiser 3. The blades 5 produce, upon the airstream generated by the blower, a joint rotational movement, which causes the atomiser head to rotate. These blades 5 are adjustable in pitch, enabling the rotational speed to be varied as required. The rotational speed determines the centrifugal forces upon the liquid as it exits the perforated rotating surface of the atomising surface 2 causing the atomisation of the liquid and the spreading of the liquid by means of the airstream.

it should be noted that the blower is used as an example of means to create the rotary motion of the rotary liquid atomiser, other embodiments may include a combustion motor, a hydraulic or pneumatic motor, a belt drive or any other mechanical means in order to create said rotary motion of the rotary liquid atomiser.

As stated above the use of a wire mesh or perforated round holes in metal sheets as an atomising surface does not allow a defined and constant liquid issuing point, so the atomised droplets become irregular. Accordingly, disclosed herein is an atomisation surface using angular forms with less than 180 degrees within a micro-perforated sheet to aid in forming liquid ligaments from the atomisation surface. The use of said angular forms allows a more regular droplet size and maximises the number of issuing points per unit area as an angular form allows a greater number of orifices per unit area, so the flow capacity increases.

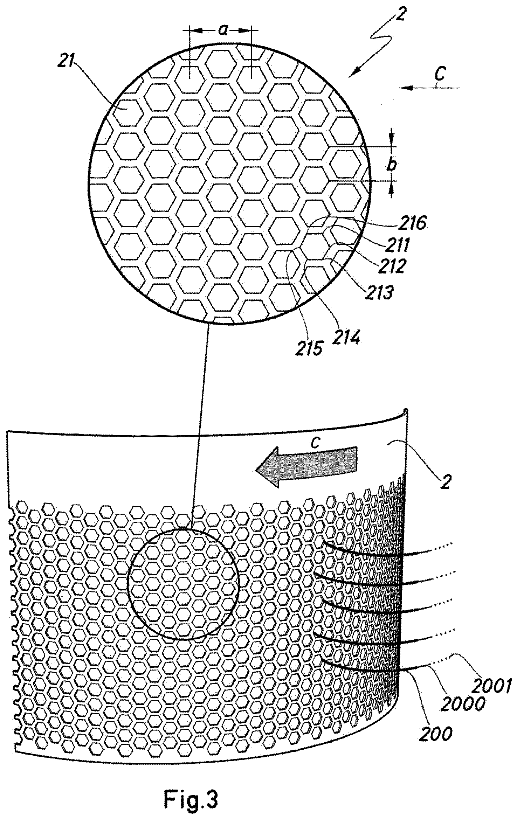

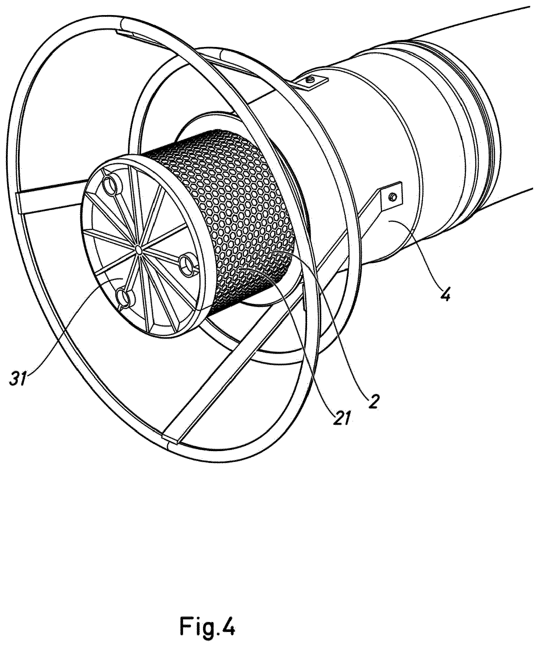

As shown in **Figs.3-4**, the atomising surface 2 comprises a plurality of shapes of equal size and form within a micro-perforated sheet. Using an angular pattern maximises the number of vertices from which liquid can be emitted per surface unit and aids in obtaining an even distribution of liquid droplets. Hole shapes with vertex distributions that are symmetrical about the axis of rotation will allow for atomisation in either direction of rotation, as each hole will have the same vertex distribution for either direction of rotation (clockwise or anticlockwise). The angular shape of the vertices of the holes also assists in overcoming the liquid's surface tension, obtaining a more even liquid breakup and forming more consistent droplet sizes.

The cut form of the perforated sheet can be, but is not limited to, hexagonal to maximise the perforated area in relation to the solid area to maximise liquid flow and shape width to reduce blockage of material within the liquid. Other cut forms may also be triangular, rhombus, parallelogram, rectangular, square, trapezoidal, kite or any other shape with an angular form less than 180 degrees.

**Fig.3** shows an atomising surface 2. Said atomising surface is made of a sheet bent into a cylindrical shape and micro-perforated with same size hexagonal shape 21 pattern. Said hexagonal shape 21, is oriented in such a way that at least two angular forms bisectors of the hexagonal shape 21 are coincident and parallel to the direction of tangential velocity C so that the liquid released internally to the rotating surface exits tangentially from the angular form.

Each hexagonal shape 21 consists of six equal edges and six equal angles sequentially linked together to form a closed geometry and six vertices. Furthermore, each hexagonal shape is disposed in rows in such a way that is separated by a distance "a" in the X direction (parallel to the direction of tangential velocity C) from the following adjacent hexagonal shape centres. Each hexagonal shape row is separated by a "b" distance in the Y direction (perpendicular to the direction of tangential velocity C) from the next hexagonal shape row centre. This arrangement of hexagonal shapes forms a flat honeycomb structure that maximises the number of filament generating points.

As previously stated, other possible hole forms may also be triangular, rhombus, parallelogram, rectangular, square, trapezoidal, kite or any other shape with an angular form less than 180 degrees. Those angular hole cut forms, with at least two angular forms bisectors coincident and parallel to the direction of tangential velocity, also allow the atomiser to work in both directions of rotation.

For those hole forms with at least one angular form formed by edges forming an angle of less than 180º, at least one angular form is oriented in such a way that its bisectors is parallel to the direction of tangential velocity C and the opening sense of said angle is the same as the sense of the tangential velocity C.

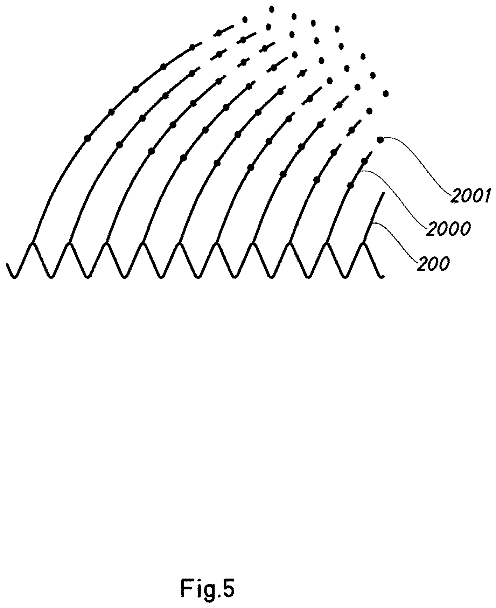

As discussed above, the use of an angular vertex pattern assists to overcoming surface tension of the liquid on a rotating device, encourage more regular liquid ligament breakup and formation of more consistent droplets sizes. In **Fig.5** it is observed the effect of overcoming the surface tension of a liquid through a sharp angular edge geometry generating a liquid ligament 200 that, due to the action of the centrifugal force, decreases its section to form a thin liquid ligament 2000 that finally breaks into regular size drops 2001. it should be noted that all the ligaments on each formed sharp angular edge geometry have a similar size.

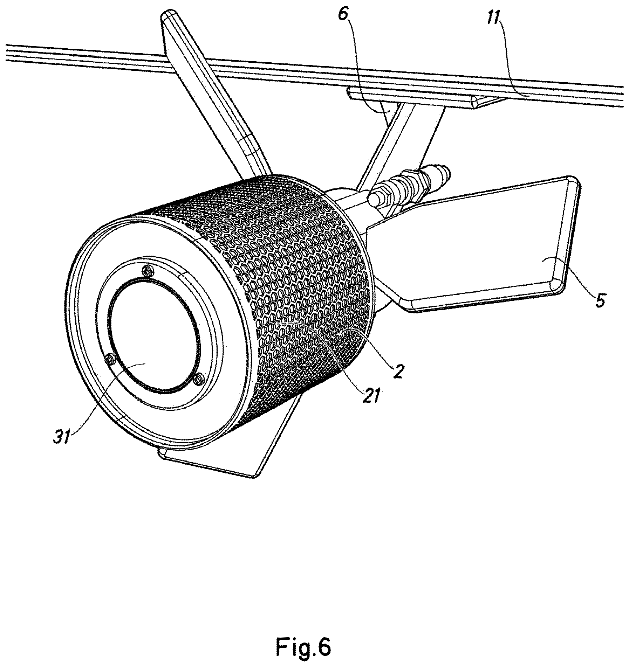

According to another aspect of the present disclosure and as shown in **Fig.6**, an atomising head comprising an atomising surface 2 and an atomiser head cover 31 is mounted to an auxiliary structure 11 for an aerial vehicle by means of a mounting clamp. As in the previously described embodiment, the atomising head is provided with blades 5 that are fixed to the outer surface of the atomising head and arranged to produce, upon an airstream, a joint rotational movement, which causes the atomiser head to rotate. These blades 5 are adjustable in pitch, enabling the rotational speed to be varied as required. The size of the spray droplets is determined by the rotational speed of the atomiser head. Therefore, it can be set to produce the correct droplet size for a particular operation by a simple adjustment of the blade angle. As the atomiser head is driven by the aerial vehicle's movement, the need for an auxiliary power to generate said airstream is eliminated.

When liquid enters the atomising head through a liquid inlet duct 6, the liquid exits the perforated rotating surface of the atomising surface 2 causing the atomisation of the liquid and the spreading of the liquid by means of the airstream. In the same way as in the previously described embodiment, the atomising surface 2 is composed of, preferably but not limited to hexagonal holes to assist to overcome the surface tension of the liquid on a rotating device and assist in more regular liquid ligament breakup and formation of more consistent droplets sizes.

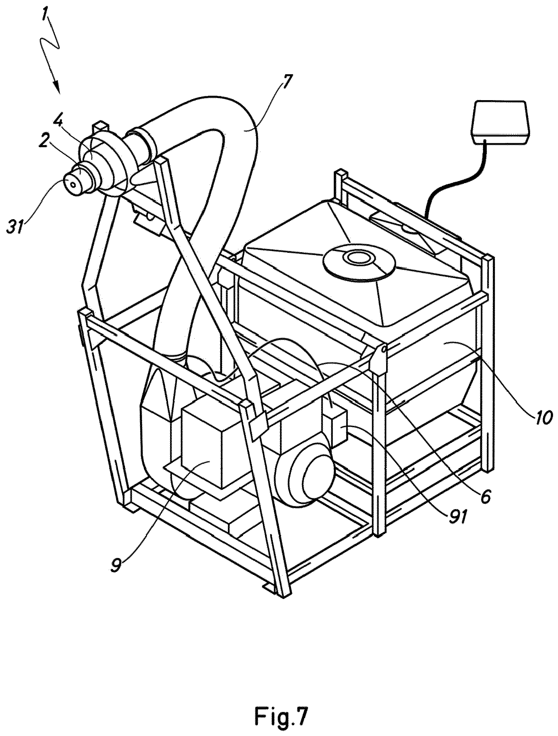

Referring now to **Fig.7**, a self-contained vehicle sprayer incorporates an air blower mounted on the base of a unit driven by an internal combustion engine 9, preferably a four-stroke engine with an electric start. A fuel tank feeds the internal combustion engine 9 by means of a fuel duct. The air blower is connected to a spray head 1 through an air inlet duct 7. Said air inlet duct 7 may be manufactured of a relatively flexible or rigid duct and furthermore has a sufficient diameter to generate the necessary flow rate at the outlet of the spray head 1. The spray head 1 is fed with a liquid pumped by a centrifugal pump 91, by means of an inlet liquid duct 6 that communicates the liquid tank 10 with the inner part of the spray head 1. The spray head is fitted in an adjustable mounting which enables it to be directed towards the target to ensure optimum coverage.

In like manner to previously described embodiments, when liquid enters the atomising head, said liquid exits the perforated rotating surface of the atomising surface 2 causing the atomisation of the liquid and the spreading of the liquid by means of the airstream. This atomising surface 2 is composed, preferably but not limited, of hexagonal forms, to assist a more regular liquid ligament breakup and formation of more consistent droplet sizes.

Although the invention has been presented and described with reference to embodiments thereof, it will be understood that said embodiments do not limit the invention, and many structural or other details which will be evident to persons skilled in the art after interpreting the subject matter disclosed in the present description, claims and drawings may vary. Thus all variants and equivalents will fall within the scope of the present invention if said variants or equivalents can be considered to fall within the most extensive scope of the following claims.

As a consequence of the aforementioned, it should be noted that a rotary atomiser can be powered by an air flow driving blades, a combustion motor, a hydraulic or pneumatic motor, a belt drive or any other mechanical means to create rotary motion.

### References:

1. Spray head
2. Atomising surface
   200. Liquid ligament
      2000. Thin liquid ligament
      2001. Regular size drops
   21. Hexagonal shape
3. Rotating liquid atomiser
   31. Atomiser head cover
   32. Flat fixing elements
   33. Mechanical joining means
   34. Hollow truncated cone-shaped body
4. Spray head surface or casing assembly
5. Blades
6. Inlet liquid duct
7. Air inlet duct
8. Moulded handle
9. Combustion engine
   91. Centrifugal pump
10. Liquid tank
   100. Motorised mist blower sprayer with rotary atomiser
11. Auxiliary structure

## Claims

1. Rotary liquid sprayer for spraying a liquid for controlling pests onto surfaces, the rotary liquid sprayer having
a spray head,
a rotary atomiser,
a mover for rotating the rotary atomiser around an axis,
a liquid reservoir,
a duct connecting the reservoir with an interior of the rotary atomiser,
the rotary atomiser having an external surface with holes which connect the interior of the rotary atomiser with its exterior for atomising the liquid coming from said interior, **characterised in that** the external surface is formed by a cylindrical sheet, and the holes have at least an angular form formed by edges forming angles of less than 180º, the angular form between said edges being evenly distributed on the surface and equidistant with respect to the axis.

2. Rotary liquid sprayer according to claim 1, **characterised in that** the angular forms formed by edges forming said angles are symmetrically distributed about the axis of rotation.

3. Rotary liquid atomiser according to any of the precedent claims, **characterised in that** the angular form forming the hole, is oriented in such a way that its bisector is coincident and parallel to the direction of tangential velocity of the rotary atomiser.

4. Rotary liquid atomiser according to claim 3, **characterised in that** the opening sense of the angle is the same as the sense of the tangential velocity of the rotary atomiser.

5. Rotary liquid atomiser according to any of the precedent claims, **characterised in that** the holes have more than one angular form forming the hole, and those are oriented in such a way that at least two angular forms bisectors are coincident and parallel to the direction of tangential velocity of the rotary atomiser.

6. Rotary liquid sprayer according to claim 5, **characterised in that** the holes have hexagonal shape.

7. Rotary liquid sprayer according to any of the precedent claims, **characterised in that** it has an airstream generator for generating an airstream along the axis and the rotary atomiser is coaxially arranged with the airstream so that the airstream surrounds the rotary atomiser.

8. Rotary liquid sprayer according to claim 7, **characterised in that** the airstream generator comprises a blower and an air duct.

9. Rotary liquid sprayer according to claim 8, **characterised in that** the mover comprises blades fixed to the rotary atomiser arranged so that the airstream impinges on the blades, making the rotary atomiser to rotate.

10. Use of a rotary liquid atomiser according to any of the preceding claims for controlling pests, public health, industrial and agricultural spraying tasks.

11. Use of a rotary liquid atomiser according to any of the preceding claims for spraying a liquid over surfaces or/and air spaces.

12. Use, according to the previous claim, wherein the liquid is a pesticide.
